# EUROPEAN PATENT APPLICATION

(11) **EP 3 989 155 A1**
(43) Date of publication of application: **27.04.2022**
(21) Application number: 21759595.8
(22) Date of filing: 19.02.2021
(51) Int. Cl.: G06Q 30/06, H04L 29/08

(54) **ASSET TRADING SYSTEM ENABLING TRANSPARENT TRADING HISTORY MANAGEMENT**

(30) Priority: 26.02.2020 KR 20200023679
(71) Applicant: TESSA CO., LTD., Seoul 04778 (KR)
(72) Inventor: KIM, Hyung Jun, Seoul 02714 (KR); KIM, Kang Hwa, Seoul 02714 (KR)
(74) Representative: Sander, Rolf
(86) International application number: PCT/KR2021/002132
(87) International publication number: WO 2021/172817

(57) **Abstract**

Provided is an asset transaction system capable of: authenticating a user of a connected user terminal in conjunction with an external authentication server; creating blockchain accounts corresponding to an asset transaction with respect to a seller and a purchaser; performing sale registration for a high-priced asset of a seller; processing a transaction of N fractional ownerships into which the full ownership of the registered high-priced asset is split; creating a blockchain account for a new trader through a blockchain account creating unit when the new trader is created while sale registration or transaction of a fractional ownership is being processed; creating a transaction history in which the created blockchain account and a member corresponding to the trader are matched; and transmitting the created transaction history to a blockchain network so that the transaction history is be shared by all nodes participating in the transaction of the asset.

## Description

### BACKGROUND OF THE DISCLOSURE

### Field of the disclosure

The present disclosure relates to a service for enabling a transaction of a high-priced asset convertable into cash and, more particularly, to an asset transaction system for a service that allows a high-priced asset to be traded in a fractional way while transparently managing a transaction history such as a purchaser, a seller, a transaction volume, a transaction amount, and the like regarding a fractional asset.

### Related Art

Expensive artworks or pieces of art have been usually traded offline. As the concept of investment has changed, it is becoming more common to trade limited edition luxury products, action figures, plastic models, luxury classic cars, golf members, and the like as well as the pieces of art or artworks as a way of investment, and accordingly, there is a service that enables such a trade to take place online.

In addition, it was difficult for ordinary people to participate in investment in high-priced assets such as pieces of art or artworks, limited edition luxury products, high-priced action figures or plastic models, luxury classic cars, and golf members, but now there is a service that splits a high-priced asset for sale, so that even an ordinary person can make an investment with a small amount of money.

Meanwhile, high-priced assets tend to increase or decrease in price depending on past transaction history, that is, transaction frequency and transaction price. Considering these price fluctuations, it is necessary for a purchaser to easily check purchase history of a corresponding high-priced asset and the purchase history should not be forged or altered by a person with a malicious intention.

In addition, since possession of such a high-priced asset is an important matter related to tax, information on the purchaser and the seller should be recorded and managed transparently in the purchase history and should also be managed in accordance with the Personal Information Protection Act.

### SUMMARY

The present disclosure provide an asset transaction system that ensures transparency of purchase history and prevent forgery or alternation in online transaction of a high-priced asset.

Technical objectives of the present disclosure are not limited to the above objective, and other objectives may be inferred from the following embodiments.

In one general aspect of the present disclosure, an asset transaction system for enabling transparent transaction history management is provided. The system includes: a user interface configured to serve as an interface with a user terminal; a member management unit configured to perform a member registration procedure with a user terminal that requests member registration; a user authentication unit configured to authenticate a user, who conducts an asset transaction, in conjunction with an external authentication server which performs authentication; a block chain account creating unit configured to create blockchain accounts for a seller having registered an asset and a purchaser having conducted a transaction of the asset; an ownership transaction processing unit configured to perform sales registration for a high-priced asset of the seller, process a transaction of fractional ownerships of the registered high-priced asset split into N, create a blockchain account for a new trader through the blockchain account creating unit when the new trader is created while the sales registration or the transaction of the ownership is being processed, and create and manage a transaction history in which the created blockchain account and member ID of the corresponding trader are matched; a blockchain link unit configured to transmit the transaction history received from the ownership transaction processing unit to a blockchain network so that the transaction history is shared by nodes participating in the transaction of the asset; and an electronic wallet management unit configured to create electronic wallets for the seller and the purchaser each registered as a member, so that the seller and the purchaser are able to check a transaction history and a number of possessed fractional ownership tokens through the electronic wallets.

When a first seller requests sales registration of a first asset, the ownership transaction processing unit may be further configured to split the first asset into N fractional assets by a number requested by the first seller, create N fractional ownership tokens for the N fractional assets, and reflect information on the N fractional ownership tokens in a first ledger for the first asset.

The ownership transaction processing unit may be further configured to: when a sales condition comprising a number and price of fractional ownership tokens to be sold as requested by the seller and a purchase condition comprising a number and price of fractional ownership tokens to be purchased as requested by the purchaser coincide with each other, perform a transaction of a corresponding fractional ownership token; and whenever a transaction between a purchaser and a seller is completed, create a transaction history in which a blockchain account created in correspondence with the corresponding transaction and member ID of the purchaser are matched and add or reflect the transaction history in a ledger of a corresponding asset.

The external authentication server may be an authentication server operated by a government agency, a mobile carrier, or a credit card company.

### BRIEF DESCRIPTION OF THE DRAWINGS

FIG. 1 is a network configuration diagram showing a service environment according to an embodiment of the present disclosure.
FIG. 2 is a block diagram of an asset transaction system for enabling transparent transaction history management according to an embodiment of the present disclosure.
FIG. 3 is a flow chart showing the overall operation of an asset transaction system for enabling transparent transaction history management according to an embodiment of the present disclosure.
FIG. 4 is a flow chart illustrating an operation of an asset transaction system for enabling transparent transaction history management in conjunction with a purchaser terminal according to an embodiment of the present disclosure.
FIG. 5 is a diagram showing a ledger managed by an asset transaction system for enabling transparent transaction history management according to an embodiment of the present disclosure and a ledger managed by a blockchain network.

### DESCRIPTION OF EXEMPLARY EMBODIMENTS

In the following, embodiments will be described clearly and in detail with reference to the accompanying drawings so that those of ordinary skill in the art to which the present disclosure pertains (hereinafter, those skilled in the art) can easily practice the present disclosure. In addition, the term "unit" used in the specification may refer to a hardware component or circuit.

Hereinafter, an asset transaction system that enables transparent transaction history management according to an embodiment of the present disclosure will be described with reference to the accompanying drawings.

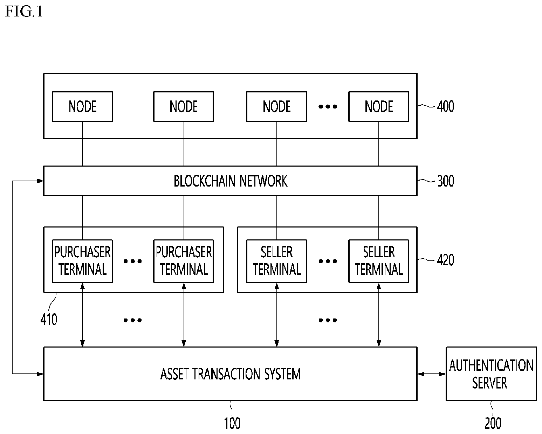

FIG. 1 is a network configuration diagram showing a service environment according to an embodiment of the present disclosure. Referring to FIG. 1, an asset transaction service according to an embodiment of the present disclosure is provided in a network environment including an asset transaction system 100, an authentication server 200, a blockchain network 300, a plurality of purchaser terminals 410, a plurality of seller terminals 420, and a plurality of blockchain nodes 400.

The asset transaction system 100 establishes a communication connection with the blockchain network 300, the plurality of purchaser terminals 410 and the plurality of seller terminals 420 and alsl establishes a communication connection with a server of a certificate authority performing reliable authentication, that is, the authentication server 200.

An asset transaction system 100 allows a seller to register a high-priced asset, a plurality of purchasers to trade some of previously-registered high-priced assets with each other, and ledgers for transaction of these assets are managed as blockchains in the blockchain network 300.

In this case, the asset transaction system 100 authenticates a purchaser and a seller through the authentication server 200 in order to ensure a transparent and reliable transaction, and allows only a person who is verified to participate in the transaction.

Here, the authentication server 200 is an authentication server operated by a public institution or private company that guarantees reliability. For example, the authentication server 200 is an authentication server operated by a mobile carrier, an authentication server operated by a credit card company, an authentication server of a company certified by a public institution, or an authentication server operated by a public institution.

In addition, the asset transaction system 100 has a function of improving opacity of identity verification of a ledger managed by the blockchain network (that is, the blockchain server) 300. Here, the opacity of identity verification of the ledger managed in the blockchain network 300 has the advantage in that the ledger provided as an open source in the blockchain network 300 is easy to access to check a transaction history for a transaction target, but since identification information of a trader in the transaction history is written as blockchain account information, it is not possible to identify a seller and a purchaser. Of course, such opacity of identification may be taken for granted according to the Personal Information Protection Act.

However, the transparency of purchasing and possessing a high-priced asset that can be converted into cash must be guaranteed under the Tax Act.

For this reason, the asset transaction system 100 according to an embodiment of the present disclosure manages a transaction history by matching a blockchain account and ID of an identified member in order to ensure transparent identity verification of sellers and purchasers while complying with the Personal Information Protection Act. It is desirable that the transaction history to be managed is accessed and checked only by a certain number of people through encryption.

The seller terminal 420 and the purchaser terminal 410 are all types of electronic devices capable of Internet access and may be mobile devices, computers, and laptops, for example. The seller terminal 420 and the purchaser terminal 410 have an application (e.g., a mobile app, etc.) installed therein to receive a service provided through the asset transaction system 100, and an electronic wallet capable of accessing the asset transaction system 100 through the application and provided by the asset transaction system 100 is installed and managed.

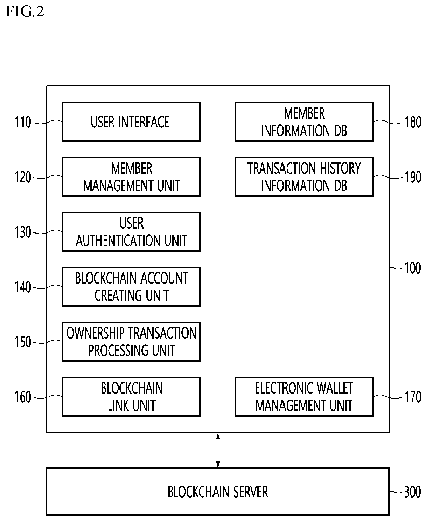

Hereinafter, the configuration of the asset transaction system 100 according to an embodiment of the present disclosure will be described with reference to FIG. 2. FIG. 2 is a block diagram of an asset transaction system for enabling transparent transaction history management according to an embodiment of the present disclosure.

Referring to FIG. 2, the asset transaction system 100 according to an embodiment of the present disclosure includes a user interface 110, a member management unit 120, a user authentication unit 130, a blockchain account creating unit 140, and an ownership transaction processing unit 150, a blockchain link unit 160, an electronic wallet management unit 170, a member information DB 180, and a transaction history information DB 190.

The user interface 110 serves as an interface between user terminals, that is, the seller terminal 420 and the purchaser terminal 410. The member management unit 120 performs a member registration procedure with a user terminal requesting member registration, creates a unique ID (identification information) of a corresponding member through the member registration procedure, and stores the ID and various member information of the corresponding member in the member information DB 180.

The user authentication unit 130 links with the authentication server 200 to perform user authentication with respect to a seller and a purchaser who perform an asset transaction. It is desirable that the user authentication by the user authentication unit 130 is performed during the member registration procedure or during the asset transaction. Of course, the user authentication unit 130 may perform user authentication by itself without the user authentication by the authentication server 200. In this case, the user authentication unit 130 receives documents required for user authentication from a seller or a purchaser.

The blockchain account creating unit 140 creates a blockchain account corresponding to the asset transaction, that is, a public address and a private key for a seller who has registered an asset and a purchaser who has performed an asset transaction.

The ownership transaction processing unit 150 performs sales registration for a high-priced asset of a seller, processes a transaction of the ownership split into N for registered high-priced asset, in response to occurrence of a new transaction for a sales registration or a fractional ownership, creates a blockchain account for the corresponding transaction through the blockchain account creating unit 140, creates and manages transaction history in which a blockchain account with member ID of a trader, and distributes the created transaction history to the blockchain network 300 in conjunction with the blockchain link unit 160.

For example, the ownership transaction processing unit 150 creates and registers N fractional ownership tokens by splitting an asset by the number requested by a seller (or the number set by default) for sales registration, creates a ledger for the registered asset, and stores the ledger in the history information DB 190. In this case, identification information (ID) of the corresponding member and the blockchain account created for the asset to be registered are matched and recorded in the ledger stored in the transaction history information DB 190, and the number and price of fractional ownerships are recorded in the corresponding ledger.

In addition, the ownership transaction processing unit 150 receives a sales condition, such as the number and price of fractional ownership tokens to be sold, requested by a seller, receives a purchase condition, such as the number and price of fractional ownership tokens to be purchased, requested by a purchaser, and performs a transaction of the corresponding fractional ownership tokens when the sales condition requested by the seller and the purchase condition requested by the purchaser coincide with each other.

In addition, whenever any transaction between a purchaser and a seller is completed, the ownership transaction processing unit 150 adds or reflects transaction details to a ledger for a corresponding asset registered in the transaction history information DB 190. At this time, the ownership transaction processing unit 150 causes a blockchain account to be created through the blockchain account creating unit 140 when the purchaser is the first transaction for the asset, and the ownership transaction processing unit 150 adds or reflects in a ledger of its own a transaction history in which the created blockchain account and member ID of the purchaser are matched.

Here, one example of the asset registration is as follows: when Seller A wishes to register 1,000 fractional ownership tokens for Artwork A, the asset registration unit 150 records member ID given to Seller A and a blockchain account created by the blockchain account creating unit 140 with respect to Artwork A in a ledger by matching the member ID and the blockchain account with each other, and records in the ledger the facts that there are 1,000 fractional ownership tokens for Artwork A and that Seller A is currently in possession of Artwork A. Here, a pre-evaluated price for Artwork A or a price for one fractional ownership token for Artwork A may be recorded in the ledger.

The blockchain linking unit 160 transmits a transaction history received from the ownership transaction processing unit 150 to the blockchain network 300 so that the transaction history is shared by nodes participating in the transaction of the asset through the blockchain network 300. For example, the blockchain link unit 160 distributes a blockchain account for sales registration and N fractional ownership tokens to a blockchain network when registering the sales of an asset. In addition, the blockchain link unit 160 distributes, to the blockchain network, each transaction history created when a fractional ownership token transaction between a seller and a purchaser takes place.

The electronic wallet management unit 170 creates electronic wallets for the seller and the purchaser, who are registered as members, so that the seller and the purchaser are able to check a transaction history and a possessed fractional ownership token through the electronic wallets.

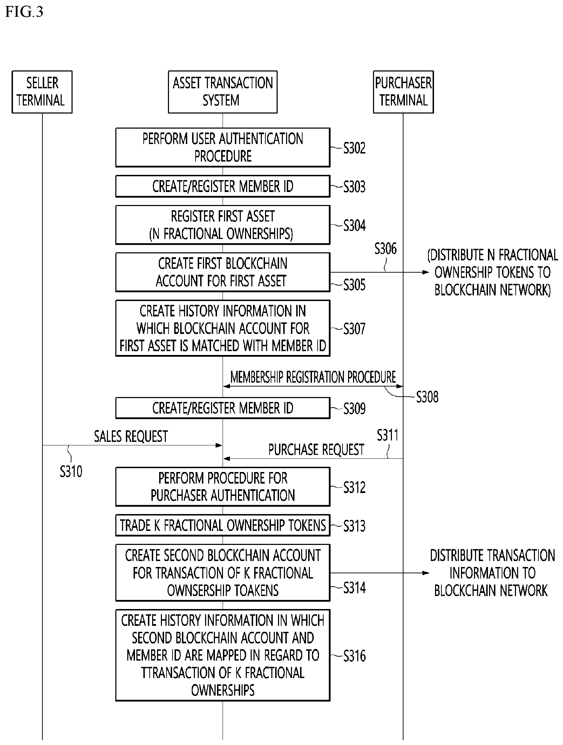

Hereinafter, the overall operation of the asset transaction system according to an embodiment of the present disclosure will be described with reference to FIG. 3. FIG. 3 is a flow chart illustrating the overall operation of an asset transaction system for enabling transparent transaction history management according to an embodiment of the present disclosure, in which a transaction process for a first asset is illustrated as an example.

Referring to FIG. 3, a seller terminal 420 of a seller in possesion with the first asset accesses the asset transaction system 100 in order to sell a part of the first asset and requests member registration.

Accordingly, the asset transaction system 100 performs a member registration procedure with the seller terminal 420 in operation S301, and transmits the seller's personal information (e.g., at least one or more of birth date, phone number, credit card number, address, etc.) received during the member registration procedure to the authentication server 200 to request authentication of the seller so that identity verification of the seller is performed in operation S302. Here, the user authentication procedure may be omitted during the member registration procedure, and in this case, the user authentication procedure may be performed at a time when the transaction is conducted.

When the identity verification, that is, authentication of the seller is done by the authentication server 200, the asset transaction system 100 creates a member ID and registers the member ID as member information in operation S303.

When the member registration is completed, the asset transaction system 100 registers the first asset of the seller in operation S304. Here, the registration of the first asset is to split the ownership of the first asset into N fractional ownerships and register the first asset in match with persons who hold the split number of the fractional ownerships.

Then, the asset transaction system 100 creates a first blockchain account for the first asset in operation S305, and distributes N fractional ownership tokens for N fractional ownerships along with the first blockchain account on the blockchain network in operation S306.

The asset transaction system 100 creates history information in which the created first blockchain account is matched with the member ID of the seller, records and manages the history information in the ledger for the first asset, and creates an electronic wallet in the seller terminal 420 or its own memory (not shown) so that the seller is able to check information on the ledger through the electronic wallet in operation S307.

Even as for a purchaser, like the seller, the asset transaction system 100 performs a member registration procedure for the purchaser who has requested member registration in operation S308, creates and assigns a member ID and then registers the member ID as member information in operation S309.

As such, in a state where both the purchaser and the seller are registered as members, when the seller requests the sales of some of the first asset, for example, K fractional ownership tokens in operation S310, the asset transaction system 100 registers sales information on the K fractional ownership tokens for the first asset.

The purchaser checks the information on the assets to be purchased through the asset transaction system 100, and checks the transaction history through the blockchain network. Then, the purchaser checks sales information on the first asset to be purchased and requests registration of purchase information to purchase the K fractional ownership tokens for the first asset in operation S311.

Here, the purchaser may first register the purchase information on the K fractional ownership tokens for the first asset, and then the seller may register the sales information on the K fractional ownership tokens for the first asset in response to the purchase information of the purchaser. Of course, the sales information and the purchase information include transaction prices for the fractional ownerships, and the transaction price included in the sales information and the transaction price included in the purchase information are the same.

When a purchase information registration request is received from the purchaser, the asset transaction system 100 performs identity verification of the purchaser through the authentication server 200 in operation S312, and performs a transaction in which the K fractional ownership tokens for the first asset are transferred from the seller to the purchaser and money is transferred from the purchaser to the seller in operation S313.

Then, the asset transaction system 100 creates a second blockchain account for the transaction of operation 313 in operation S314 and transmits the second blockchain account and transaction history on the blockchain network in operation S315.

In addition, the asset transaction system 100 creates and stores a ledger for the transaction of operation S313 in operation S316. In this case, the second blockchain account and the purchaser's member ID are matched in the ledger, and seller identification information (or the first blockchain account) and the number of fractional ownership tokens sold are included in the ledger. Of course, the ledger may include a sales price.

The asset transaction system 100 creates an electronic wallet in the purchaser terminal 410 so that the purchaser is able to check information on the ledger corresponding to the second blockchain account.

Meanwhile, the seller must entrust his or her real asset, that is, a piece of art or artwork such as porcelain, a golf member, an action figure, etc. to an operator of the asset transaction system. Since the operator of the asset transaction system manages the storage of the real asset, the operator may register the seller's asset by itself. In this case, operations of S301 to S307 in which the seller uses his/her terminal to register the asset may be omitted.

In the above-described embodiment, it has been described that the seller performs user authentication during the member registration procedure and the purchaser performs user authentication during the purchase transaction, but aspects of the present disclosure are not limited thereto. That is, the user authentication of the seller and the purchaser may be performed in connection with one of the member registration procedure and the purchase transaction procedure.

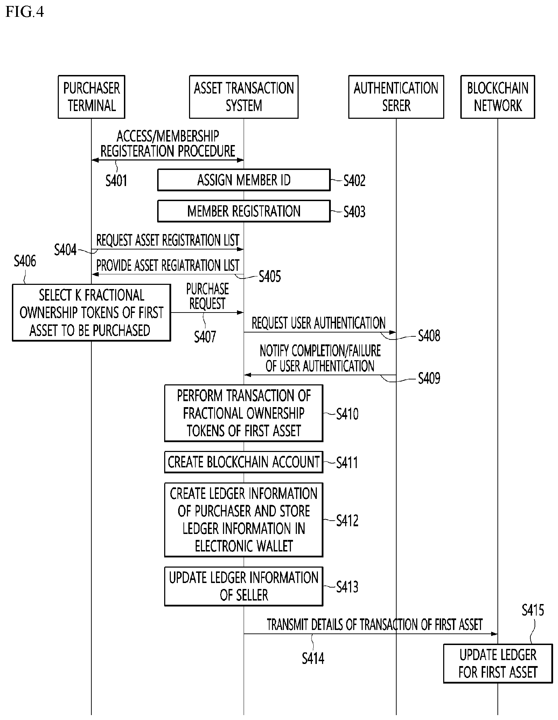

Hereinafter, an operation of the asset transaction system for enabling transparent transaction history management in conjunction with a purchaser terminal according to an embodiment of the present disclosure will be described with reference to FIG. 4.

FIG. 4 is a flow chart illustrating an operation of an asset transaction system for enabling transparent transaction history management in conjunction with a purchaser terminal according to an embodiment of the present disclosure, in which sales information on K fractional ownership tokens for a first asset is pre-registered is illustrated as an example.

Referring to FIG. 4, the asset transaction system 100 performs a member registration procedure for a purchaser terminal 410 that has requested member registration in operation S401, assigns the purchaser terminal 410 a member ID in operation S402, and registers various types of personal information received from the purchaser terminal 410 as member information along with the member ID in operation S403.

When the member-registered purchaser requests an asset registration list to identify an asset to be purchased in operation S404, the asset transaction system 100 provides a registered asset registration list to the purchaser terminal 410 in operation S405. Then, the purchaser checks each sales information item in the asset registration list and then identifies a desired asset and the number and the price for fractional ownerships of the desired asset.

When the purchaser selects one of sales information items included in the asset registration list, for example, when the purchaser selects K fractional ownership tokens for the first asset in operation S406, the asset transaction system 100 receives a request for purchase of K fractional ownership token for the first asset from the purchaser terminal 410 in operation S407 and performs user authentication on the purchaser in conjunction with the authentication server 200 in operations S408 and S409.

The asset transaction system 100 makes sure that a purchase is made only by a purchaser whose identity is verified in a user authentication procedure through the authentication server 200, and in response to a purchase request from a purchaser whose identity is guaranteed, the transaction of K fractional ownership tokens for the first asset A is conducted in operation S410.

Then, the asset transaction system 100 creates a blockchain account for the transaction of operation S410 in operation S411, and transmits the blockchain account and a transaction history created by the blockchain network in operation S412. Here, the blockchain account and the purchaser's member ID are matched in the transaction history.

In addition, the asset transaction system 100 creates and stores a ledger for the transaction of operation S410, and enables the purchaser terminal 410 or the corresponding electronic wallet of the trading system 100 to check the transaction history in operation S412.

The asset transaction system 100 reflects (updates) information changed upon the transaction of operation S410 in ledger information of the corresponding seller in operation S413 and transmits details of the transaction of the first asset to the blockchain network in operation S414 so that the details of the transaction are shared among all nodes participating in the transaction of the asset in operation S415.

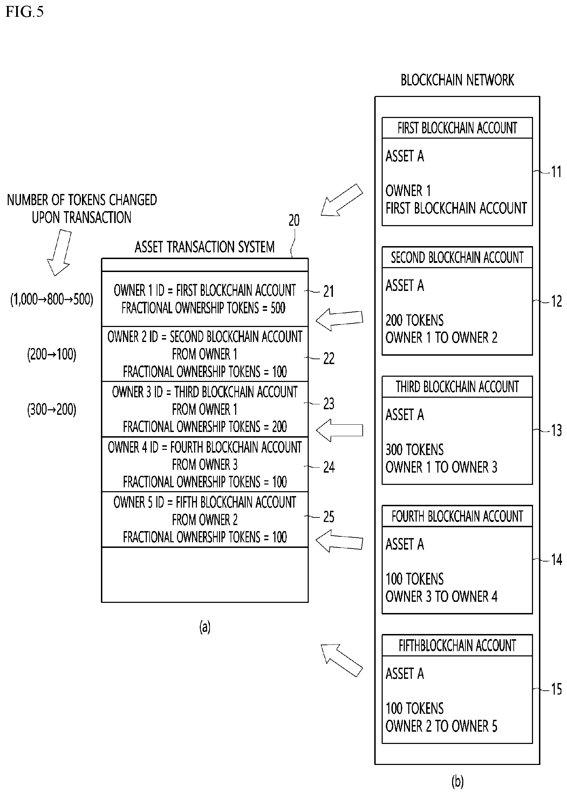

Hereinafter, a service operation of the present disclosure based on a ledger will be described with reference to FIG. 5. FIG. 5 is a diagram showing a ledger managed by an asset transaction system for enabling transparent transaction history management according to an embodiment of the present disclosure and a ledger managed by a blockchain network.

Referring to FIG. 5, transaction record regarding Owner 1 who first holds 1,000 fractional ownership tokens for Asset A is recorded in a ledger 11 of a first blockchain account and managed in a blockchain network, that is, a blockchain server (not shown), as shown in (b) of FIG. 5. In the ledger 11 of the first blockchain account, information such as an account of a first blockchain, identification information of Asset A, identification information of Owner 1, and the number of tokens possessed by Owner 1 is recorded.

In addition, in correspondence with a ledger 11 of the first blockchain account, ID of Owner 1 and the first blockchain account are matched and recorded in the ledger 20 for Asset A managed by the asset transaction system 100, and a transaction history 21 in which the number of tokens possessed by Owner 1 is recorded as 1,000 is included in the ledger 20. In the above, the identification information of Owner 1 of the ledger 11 and the ID of Owner 1 of the transaction history 21 are different from each other.

Next, when 200 of the fractional ownership tokens of Asset A from Owner 1 to Owner 2 are transferred, a ledger 12 of a second blockchain account is managed in the blockchain network, and information such as the second blockchain account, identity information of Asset A, the transaction from Owner 1 to Owner 2, and the number of the tokens transferred is recorded in the ledger 12. In correspondence with the ledger 12, ID of Owner 2 and the second blockchain account are matched with and recorded in the ledger 20 of Asset A managed by the asset transaction system 100, and transaction history 22 in which the number of tokens possessed by Owner 2 is recorded as 200 is included in the ledger 20. In this case, the number of fractional ownership tokens in possession is changed from 1,000 to 800 in the transaction history 21.

When 300 of the fractional ownership tokens of Owner 1 is transferred to Owner 3, a ledger 13 of a third blockchain account is managed in the blockchain network, and information such as the third blockchain account, the identity information of Asset A, the transaction from Owner 1 to Owner 3, and the number of the tokens transferred may be recorded in the ledger 13. In correspondence with the ledger 13, ID of the owner 3 and the third blockchain account are matched with and recorded in the ledger 20 of Asset A managed by the asset transaction system 100, and transaction history in which the number of the tokens possessed by Owner 3 is recorded as 300 is included in the ledger 20. In this case, the number of tokens in possession is changed from 800 to 500 in the transaction history 21.

When 100 of the fractional ownership tokens of Asset A are transferred from Owner 3 to Owner 4, a ledger 14 of a fourth blockchain account is managed in the blockchain network, and information such as the fourth blockchain account, the identity information of Asset A, the transaction from Owner 3 to Owner 4, and the number of the tokens transferred is recorded in the ledger 14. In correspondence with the ledger 14, ID of Owner 4 and the fourth blockchain account are matched and recorded in the ledger 20 of Asset A managed by the asset transaction system 100, and transaction history 24 in which the number of the tokens possessed by Owner 4 is recorded as 100 is included in the ledger 20. In this case, the number of tokens in possession is changed from 300 to 200 in the transaction history 23.

Then, when 100 of the fractional ownership tokens of Asset A are transferred from Owner 2 to Owner 5, a ledger of a fifth blockchain account is managed in the blockchain network, and information such as the fifth block chain account, identification information of Asset A, information indicating the transaction from Owner 2 to Owner 5, the number of the tokens transferred, and the like is recorded in the ledger 15. In correspondence with the ledger 15, ID of Owner 5 and the fifth blockchain account are matched and recorded in the ledger 20 for Asset A managed in the asset transaction system 100, and a transaction history 25 in which the number of tokens possessed by Owner 5 is recrded as 100 is included in the ledger 20. In this case, the number of tokens in possession is changed from 200 to 100 in the transaction history 22.

According to the above-described embodiments of the present disclosure, it is possible to ensure transparency by managing the transaction history of N fractional ownership tokens for a high-priced asset through a blockchain network and to verify and manage identification information of a seller and a purchaser participating in a transaction of the high-priced asset so that each trader participating in the transaction of the asset is allowed to figure out the number of fractional ownership tokens possessed by a corresponding trader.

According to an embodiment of the present disclosure, transparency of ownership may be ensured in addition to transparency of transaction for various types of a splittable asset as transactions are conducted on a real-name member basis, and tax evasion may be prevented and anti-money laundering (AML) may be sought for as it is possible to track and manage records of all transaction types such as purchase/sale, transfer/acquisition, sale/purchase, etc.

The above descriptions are intended to provide exemplary configurations and operations for implementing the present disclosure. It is understood that the technical spirit of the present disclosure is not limited to the above-descrbied embodiments but includes implementations that can be achieved by easily changing or modifying the embodiments describe above. In addition, it is understood that the technical spirit of the present disclosure includes implementations that can be achieved by easily changing or modifying the embodiments described above.

## Claims

1. An asset transaction system for enabling transparent transaction history management, the system comprising:
a user interface configured to serve as an interface with a user terminal;
a member management unit configured to perform a member registration procedure with a user terminal that requests member registration;
a user authentication unit configured to authenticate a user, who conducts an asset transaction, in conjunction with an external authentication server which performs authentication;
a block chain account creating unit configured to create blockchain accounts for a seller having registered an asset and a purchaser having conducted a transaction of the asset;
an ownership transaction processing unit configured to
perform sales registration for a high-priced asset of the seller,
process a transaction of fractional ownerships of the registered high-priced asset split into N,
create a blockchain account for a new trader through the blockchain account creating unit when the new trader is created while the sales registration or the transaction of the ownership is being processed, and
create and manage a transaction history in which the created blockchain account and member ID of the corresponding trader are matched; and
a blockchain link unit configured to transmit the transaction history received from the ownership transaction processing unit to a blockchain network so that the transaction history is shared by nodes participating in the transaction of the asset.

2. The asset transaction system of claim 1, further comprising:
an electronic wallet management unit configured to create electronic wallets for the seller and the purchaser each registered as a member, so that the seller and the purchaser are able to check a transaction history and a number of held fractional ownership tokens through the electronic wallets.

3. The asset transaction system of claim 1, wherein when a first seller requests sales registration of a first asset, the ownership transaction processing unit is further configured to split the first asset into N fractional assets by a number requested by the first seller, create N fractional ownership tokens for the N fractional assets, and reflect information on the N fractional ownership tokens in a first ledger for the first asset.

4. The asset transaction system of claim 3, wherein the ownership transaction processing unit is further configured to reflect, in the first ledger, a transaction history in which a first blockchain account created in response to sales registration of the first asset and member ID of the first seller are matched and recorded.

5. The asset transaction system of claim 1, wherein the ownership transaction processing unit is further configured to:
when a sales condition comprising a number and price of fractional ownership tokens to be sold as requested by the seller and a purchase condition comprising a number and price of fractional ownership tokens to be purchased as requested by the purchaser coincide with each other, perform a transaction of a corresponding fractional ownership token; and
when a transaction between the purchaser and the seller is completed, create a transaction history in which a blockchain account created in correspondence with the corresponding transaction and member ID of the purchaser are matched and add or reflect the transaction history in a ledger of the corresponding asset.

6. The asset transaction system of claim 2, wherein the ownership transaction processing unit is further configured to:
when a sales condition comprising a number and price of fractional ownership tokens to be sold as requested by the seller and a purchase condition comprising a number and price of fractional ownership tokens to be purchased as requested by the purchaser coincide with each other, perform a transaction of a corresponding fractional ownership token; and
when a transaction between the purchaser and the seller is completed, create a transaction history in which a blockchain account created in correspondence with the corresponding transaction and member ID of the purchaser are matched and add or reflect the transaction history in a ledger of the corresponding asset.

7. The asset transaction system of claim 1, wherein the external authentication server is an authentication server operated by a government agency, a mobile carrier, or a credit card company.
